(19) Europäisches Patentamt
European Patent Office
Office européen des brevets

(11) **EP 3 597 315 A1**

(12) **EUROPÄISCHE PATENTANMELDUNG**

(43) Veröffentlichungstag:
**22.01.2020 Patentblatt 2020/04**

(21) Anmeldenummer: **19186130.1**

(22) Anmeldetag: **12.07.2019**

(51) Int Cl.:
*B07B 1/12* (2006.01)    *B07B 13/00* (2006.01)
*B07B 13/04* (2006.01)    *B07B 13/16* (2006.01)
*B07C 5/02* (2006.01)    *B07C 5/344* (2006.01)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **12.07.2018 DE 102018116905**

(71) Anmelder: **Vasold, Hans-Joerg**
**85098 Grossmehring (DE)**

(72) Erfinder: **Vasold, Hans-Joerg**
**85098 Grossmehring (DE)**

(74) Vertreter: **Bergmeier, Ulrich**
**Canzler & Bergmeier**
**Patentanwälte Partnerschaft mbB**
**Friedrich-Ebert-Straße 84**
**85055 Ingolstadt (DE)**

(54) **VORRICHTUNG ZUM AUSRICHTEN, VERARBEITEN UND SORTIEREN VON BATTERIEN UND VERFAHREN ZUM SORTIEREN VON BATTERIEN**

(57)    Die Erfindung betrifft eine Vorrichtung (1) zum Sortieren und/oder Verarbeiten von Batterien (2) mit einer Sortiereinheit (3), mittels der der Vorrichtung (1) zugeführten Batterien (2) in eine Verarbeitungsorientierung (4) ausrichtbar sind. Erfindungsgemäß weist die Vorrichtung (1) eine Verarbeitungseinheit und/oder eine Erkennungseinheit (17) auf, die derart angeordnet ist, dass dieser die in Verarbeitungsorientierung (4) ausgerichteten Batterien (2) zuführbar sind, und die die in Verarbeitungsorientierung (4) ausgerichteten Batterien (2) verarbeiten und/oder erkennen kann. Des Weiteren betrifft die Erfindung ein Verfahren zum Sortieren von Batterien.

Fig. 1

**Beschreibung**

Die vorliegende Erfindung betrifft eine Vorrichtung zum Verarbeiten und/oder Sortieren von Batterien mit einer Ausrichteinheit, mittels der der Vorrichtung zugeführten Batterien in einer Verarbeitungsorientierung ausrichtbar sind und dadurch gleichzeitig verarbeitet werden können. Außerdem betrifft die Erfindung ein Verfahren zum Sortieren von Batterien.

Aus der DE 43 34 714 C2 ist eine Vorrichtung zum Sortieren gebrauchter Trockenbatterien offenbart. Die Vorrichtung weist einen Rütteltisch auf, mittels dem beispielsweise Knopfbatterien von den zugeführten Batterien ausgesiebt werden. Die restlichen Batterien fallen auf ein Förderband, welches die Batterien zu Sortierstrecken transportiert. Die in DE 43 34 714 C2 vorgestellte Vorrichtung wird nur zum Abscheiden von Kopfzellen und anderer kleiner Störstoffe verwendet.

Aufgabe der vorliegenden Erfindung ist es somit, das Verarbeiten von Batterien zu verbessern.

Die Aufgabe wird gelöst durch ein Verfahren zum Ausrichten von Batterien, sowie einem Sortierverfahren mit den Merkmalen der unabhängigen Patentansprüche.

Vorgeschlagen wird eine Vorrichtung zum Sortieren und/oder Verarbeiten von Batterien. Die Vorrichtung kann somit eine Sortiervorrichtung sein. Die Vorrichtung kann auch eine Sortier-/Verarbeitungsvorrichtung für Batterien sein. In Hinsicht auf die langsam zu Neige gehenden Rohstoffe ist es sinnvoll, die Batterien bzw. die darin enthaltenen Materialien und chemischen Elemente zu recyceln. Dazu ist eine Sortierung der Batteriensorten unerlässlich, um die einzelnen Batteriensorten in einem auf die Batteriensorte zugeschnittenen Verfahren wiederzuverwerten. Zusätzlich oder alternativ können mit der Vorrichtung die Batterien auch weiterverarbeitet werden, wenn es sich bei den Batterien beispielsweise um noch funktionsfähige Batterien handelt.

Die Vorrichtung umfasst eine Ausrichteinheit, mittels der der Vorrichtung zugeführten Batterien in eine Verarbeitungsorientierung ausgerichtet werden können. Sind die Batterien in die Verarbeitungsorientierung ausgerichtet, können diese besser für ein weiteres automatisiertes Sortier- und/oder Verarbeitungsverfahren behandelt werden. Mit Hilfe der Ausrichteinheit können die Batterien somit ausgerichtet werden. Nachdem die Batterien die Ausrichteinheit beispielsweise durchlaufen haben, weisen die Batterien die Verarbeitungsorientierung auf. Die Batterien können alle zueinander parallel ausgerichtet sein, so dass sie vorteilhafter, insbesondere automatisiert, weiterverarbeitet werden können.

Erfindungsgemäß weist die Vorrichtung Erkennungseinheiten auf die derart angeordnet sind, dass dieser die in Verarbeitungsorientierung ausgerichteten Batterien zuführbar sind, und die die in Verarbeitungsorientierung ausgerichteten Batterien erkennen kann. Die Vorrichtung kann beispielsweise ebenso viele Erkennungseinheiten aufweisen, wie parallele Verarbeitungsstränge in der Ausrichteinheit vorhanden sind. Die Anzahl der Erkennungseinheiten kann mit der Zahl der durch die Ausrichteinheit verarbeiteten Batterien skalieren. Eine Erkennungseinheit kann beispielsweise eine Batteriensorte der Batterien erkennen, um die Batterien entsprechend ihrer Batteriensorte weiterverarbeiten zu können. Dadurch kann beispielsweise erkannt werden, ob es sich bei den Batterien um Batterien, also nicht aufladbare Batterien, oder um Akkumulatoren, also wieder aufladbare Batterien, handelt. Mit Hilfe der Erkennungseinheit kann auch erkannt werden, um welche Art Batterien es sich handelt. Es kann beispielsweise erkannt werden, ob es sich um Alkali-Mangan-Batterien, Zink-Kohle-Batterien, Nickel-Cadmium-Batterien und/oder Lithium-Batterien, usw. handelt. Entsprechend der Batteriensorte können die Batterien weiterbehandelt werden. Dabei kann die Erkennungseinheit beispielsweise auch die Form, die Größe, insbesondere die Länge, die Breite, die Höhe und/oder den Querschnitt, der Batterien erkennen, um anhand dessen die Batteriensorte ermitteln zu können.

Zusätzlich oder alternativ kann die Vorrichtung weitere Verarbeitungseinheiten aufweisen, die derart angeordnet ist, dass dieser die in Verarbeitungsorientierung ausgerichteten Batterien zuführbar sind, und die die in Verarbeitungsorientierung ausgerichteten Batterien verarbeiten kann. Die Vorrichtung kann beispielsweise ebenso viele Verarbeitungseinheiten aufweisen, wie parallele Verarbeitungsstränge in der Ausrichteinheit vorhanden sind. Die Anzahl der Verarbeitungseinheiten kann mit der Zahl der durch die Ausrichteinheit verarbeiteten Batterien skalieren. Die Anzahl der Verarbeitungseinheiten kann auch mit der Anzahl der Erkennungseinheiten skalieren. Die Verarbeitungseinheit kann beispielsweise eine Verpackungseinheit sein, mittels der die beispielsweise noch funktionsfähigen Batterien verpackt werden können. Sind die Batterien in die Verarbeitungsorientierung ausgerichtet, können diese besser in eine dafür vorgesehene Verpackung verpackt werden.

Ein Vorteil der Erfindung ist es, dass der der Ausrichtung anschließende Verarbeitungsschritt und/oder Erkennungsschritt nahezu beliebig skaliert werden kann und parallel mit Hilfe einiger Verarbeitungs- und/oder Erkennungseinheiten gleichzeitig durchgeführt werden kann.

In einer vorteilhaften Weiterbildung ist die Ausrichteinheit derart ausgebildet, dass mittels dieser zumindest eine Batteriensorte von den der Vorrichtung zugeführten Batterien absonderbar ist. Bei den der Vorrichtung zugeführten Batterien kann es sich um ein Gemisch aus mehreren Batteriensorten handeln. In dem Gemisch können beispielsweise zylinderförmige Batterien, quaderförmige Batterien und/oder Knopfzellen, Batterien mit unterschiedlichen Spannungen, wie beispielsweise 1,5 V- Batterien, 4,5 V Batterien und/oder 9 V-Batterien, sowie Batterien mit unterschiedlichen Inhaltsstoffen enthalten sein. Die Absonderung von zumindest einer Batteriensorte von den der Vorrichtung zugeführten Batterien mittels der Ausrichteinheit kann beispielsweise eine Weiterverarbeitung der zurückbleibenden Batterien vereinfachen. Beispielsweise können durch die Ausrichteinheit die Knopfzellen abgesondert werden.

Vorteilhaft ist die Ausrichteinheit derart ausgebildet, dass mit dieser mehrere Batterien gleichzeitig ausgerichtet werden können. Dadurch können die Batterien mit der Ausrichteinheit in einem parallelen Verfahren gleichzeitig ausgerichtet werden.

Zusätzlich oder alternativ kann die Ausrichteinheit derart ausgebildet, dass mittels dieser Fremdstoffe von den der Vorrichtung zugeführten Batterien absonderbar ist. Da das Gemisch von Batterien auch Schmutz, wie beispielsweise Holzsplitter, Schrauben, Glassplitter oder anderen Fremdpartikel, enthalten kann, ist es vorteilhaft, wenn mittels der Ausrichteinheit die Fremdstoffe abgesondert werden können.

Mit der Ausrichteinheit kann gleichzeitig zumindest eine Batteriensorte und/oder Fremdstoffe abgesondert und die Batterien in Verarbeitungsorientierung ausgerichtet werden.

Die Ausrichteinheit kann auch eine Absonder-/Ausrichteinheit sein. Mit Hilfe der Absonder-/Ausrichteinheit kann gleichzeitig zumindest eine Batteriensorte und/oder Fremdstoffe abgesondert und die Batterien in Verarbeitungsorientierung ausgerichtet werden.

Um die zumindest eine Batteriensorte und/oder die Fremdstoffe abzusondern, kann die Ausrichteinheit beispielsweise als eine Siebeinheit ausgebildet sein. Die zumindest eine Batteriensorte und/oder die Fremdstoffe können somit von den der Vorrichtung zugeführten Batterien ausgesiebt werden. Wenn die Ausrichteinheit die Batterien, zusätzlich zum Absondern der zumindest einen Batteriensorte und/oder Fremdstoffe, in die Verarbeitungsorientierung ausrichtet, ist die Ausrichteinheit eine Sieb-/Ausrichteinheit.

Vorteilhaft ist es ferner, wenn die Ausrichteinheit derart ausgebildet ist, dass mehrere Batterien gleichzeitig in die Verarbeitungsorientierung ausgerichtet werden können. Dadurch kann in kürzerer Zeit mehrere Batterien ausgerichtet werden. Eine Verarbeitungsleistung der Vorrichtung ist somit erhöht.

In einer vorteilhaften Weiterbildung der Erfindung weist die Ausrichteinheit ein Stangensieb auf. Mit Hilfe des Stangensiebs kann die abzusondernden Batteriensorte abgesondert werden. Die Batteriensorte kann durch das Stangensieb hindurchfallen. Das Stangensieb kann dabei derart ausgebildet sein, dass die Batterien, die nicht abgesondert werden sollen, zurückbleiben. Zusätzlich oder alternativ kann die Ausrichteinheit eine Vielzahl längliche und parallel zueinander angeordnete Profile umfassen. Die Profile können beispielsweise einen runden, einen ovalen, einen elliptischen, einen dreieckigen, einen viereckigen und/oder einen mehreckigen Querschnitt aufweisen. Des Weiteren können zwei zueinander benachbarte Profile zueinander einen Abstand aufweisen, der höchstens 8 mm beträgt, so dass die abzusondernde Batteriensorte zwischen den Profilen hindurchfällt. Der Abstand zwischen den Profilen kann natürlich auch davon abhängen, welche Batteriensorte abgesondert werden soll. Wenn der Abstand beispielsweise höchstens 8 mm beträgt, können beispielsweise Knopfzellen zwischen den Profilen hindurchfallen, wohingegen zylindrische Batterien mit einem größeren Durchmesser von den Profilen zurückgehalten werden. Mit Hilfe des Stangensiebs können mehrere Batterien gleichzeitig zumindest ausgerichtet werden, wenn das Stangensieb mehrere, parallel zueinander angeordnete Stangen aufweist. Das Stangensieb weist somit eine Breite auf, wobei über der Breite mehrere Batterien gleichzeitig ausgerichtet werden.

Vorteilhaft ist es, wenn die Vorrichtung eine Siebvorrichtung aufweist. Mit Hilfe der Siebvorrichtung können beispielsweise kleinere Gegenstände, wie Schrauben, Holzsplitter oder ähnliches, ausgesiebt werden. Mittels der Siebvorrichtung kann auch Wasser von den Batterien getrennt werden. Die Siebvorrichtung kann beispielsweise entsprechende Löcher aufweisen, durch die die kleineren Gegenstände und das Wasser hindurchfallen können, die zu sortierenden Batterien jedoch zurückgehalten werden. Zusätzlich oder alternativ kann die Siebvorrichtung auch eine Rinne aufweisen, in der sich das Wasser sammeln und abgeführt werden kann. Die Siebvorrichtung ist vorteilhafterweise in Durchlaufrichtung der Batterien vor der Ausrichteinheit angeordnet, so dass die Verschmutzungen und das Wasser vor der Sortierung, d.h. vor dem Absondern der abzusondernden Batteriensorte und/oder dem Ausrichten der zurückbleibenden Batterien, abgetrennt sind.

Von Vorteil ist es ferner, wenn die Vorrichtung eine Transporteinheit aufweist, mittels der die Batterien und/oder Batterienbehälter mit Batterien zur Ausrichteinheit und/oder zur Siebvorrichtung transportierbar sind. Dadurch können die Batterien kontinuierlich zur Ausrichteinheit und/oder zur Siebvorrichtung transportiert werden. Die Transporteinheit kann beispielsweise ein Transportband sein, auf dem die Batterienbehälter und/oder die Batterien transportierbar sind.

Zusätzlich oder alternativ kann zwischen der Transporteinheit und der Ausrichteinheit und/oder an einem Anfangsbereich der Transporteinheit eine Wiegeeinrichtung angeordnet sein. Mittels der Wiegeeinrichtung können die zu sortierenden Batterien gewogen werden.

Zusätzlich oder alternativ können mittels einer Umladevorrichtung die Batterien von der Transporteinheit und/oder die in Batteriebehältern befindlichen Batterien in die Siebvorrichtung und/oder in die Ausrichteinheit umgeladen werden. Dadurch kann die Vorrichtung weiter automatisiert werden.

Vorteilhaft ist es, wenn zumindest ein Rückhalteelement in einer Höhe von einer Oberseite der Ausrichteinheit und/oder der Siebvorrichtung beabstandet angeordnet ist. Die Höhe des Rückhalteelements über der Oberseite kann beispielsweise derart sein, dass Autobatterien zurückgehalten werden. Mittels des Rückhalteelements können somit größere Gegenstände zurückgehalten werden. Das Rückhalteelement kann beispielsweise eine Leiste sein, die parallel über der Ausrichteinheit und/oder der Siebvorrichtung angeordnet ist, so dass die Gegenstände in Durchlaufrichtung zurückgehalten werden, wenn sie eine Größe aufweisen, die größer ist als die Höhe des Rückhalteelements. Die Gegenstände passen somit nur unter dem Rückhalteelement durch. Die zurückgehaltenen Gegenstände sammeln sich an dem Rückhalteelement und können dann von Zeit zu Zeit, beispielsweise mittels eines Schiebers, entfernt werden.

Das Rückhalteelement kann sich ferner beispielsweise quer zur Ausrichteinheit und/oder der Siebvorrichtung erstrecken. Dadurch können die größeren Gegenstände über der ganzen Breite der Ausrichteinheit und/oder der Siebvorrichtung zurückgehalten werden. Zusätzlich oder alternativ kann das Rückhalteelement auch höhenverstellbar sein, so dass eingestellt werden kann, welche Gegenstände zurückgehalten werden.

Ebenso ist es von Vorteil, wenn über der Oberseite der Ausrichteinheit und/oder der Siebvorrichtung in Durchlaufrichtung der Batterien mehrere voneinander beabstandete Rückhalteelemente angeordnet sind, wobei die Höhen der Rückhalteelemente zueinander abgestuft sind. Zusätzlich oder alternativ können sich die Höhen von Rückhalteelement zu Rückhalteelement in Durchlaufrichtung verringern. Das heißt, das in Durchlaufrichtung erste Rückhalteelement weist die größte Höhe über der Oberseite auf, so dass lediglich die größten Gegenstände von diesem Rückhalteelement zurückgehalten werden und kleinere Gegenstände durchgelassen werden. Das auf das erste Rückhalteelement folgenden zweite Rückhalteelement weist eine geringere Höhe auf, so dass entsprechend kleinere Gegenstände zurückgehalten werden. Folgen noch weitere Rückhalteelemente, weisen diese eine Höhe auf, die von Rückhalteelement zu Rückhalteelement geringer ist.

Vorteilhaft ist es jedoch, wenn das in Durchlaufrichtung letzte Rückhalteelement eine Höhe aufweist, dass die mittels der Vorrichtung zu sortierenden Batterien das Rückhalteelement passieren können. Dadurch werden mittels der Rückhalteelemente Gegenstände aussortiert, die nicht mittels der Vorrichtung sortiert werden. Vorteilhafterweise kann vor jedem Rückhalteelement ein Schieber angeordnet sein, der von Zeit zu Zeit die am Rückhalteelement zurückgehaltenen Gegenstände, insbesondere seitlich, wegschiebt. Die Schieber können die Gegenstände seitlich von der Ausrichteinheit in beispielsweise einen Müllbehälter schieben.

Außerdem ist es von Vorteil, wenn die Ausrichteinheit und/oder die Siebvorrichtung gegenüber einer Horizontalen in einem Winkel geneigt ist, so dass die Ausrichteinheit und/oder die Siebvorrichtung in Durchlaufrichtung abfallen. Die Batterien können dadurch in Durchlaufrichtung durch die Ausrichteinheit und/oder die Siebvorrichtung rutschen. Die Ausrichteinheit und/oder die Siebvorrichtung kann beispielsweise in einem Winkel von 5° - 35° gegenüber der Horizontalen geneigt sein, so dass infolge der Schwerkraft die Batterien durch die Ausrichteinheit und/oder die Siebvorrichtung in Durchlaufrichtung durchlaufen. Während Batterien dabei die Ausrichteinheit durchlaufen, richten sich die Batterien in Verarbeitungsorientierung aus. Zusätzlich oder alternativ kann zumindest eine Batteriensorte abgesondert werden, wenn die Ausrichteinheit derart ausgebildet ist, dass diese die zumindest eine Batteriensorte absondern kann. Um dies zu ermöglichen, kann die Ausrichteinheit beispielsweise als Absonder-/Ausrichteinheit oder als Sieb-/Ausrichteinheit ausgebildet sein.

Des Weiteren ist es von Vorteil, wenn die Vorrichtung eine Schiebereinheit aufweist, mittels der Batterien zumindest in der Ausrichteinheit und/oder in der Siebvorrichtung in Durchlaufrichtung der Batterien verschiebbar sind. Zusätzlich oder alternativ ist es vorteilhaft, wenn mittels der Schiebereinheit die Batterien von der Transporteinheit zur Siebvorrichtung und/oder zur Ausrichteinheit verschiebbar sind. Dadurch können die Batterien in Durchlaufrichtung bewegt werden. Die Schiebereinheit ist auch dann von Vorteil, wenn sich die Batterien in einem Bereich der Vorrichtung anhäufen und sich nicht mehr weiterbewegen. Mittels der Schiebereinheit können die Batterien dann wieder angeschoben werden. Die Schiebereinheit kann beispielsweise als Besen ausgebildet sein. Zusätzlich oder alternativ kann die Schiebereinheit auch als Rechen ausgebildet sein.

Von Vorteil ist es, wenn die Schiebereinheit einen manuell oder motorisch betriebenen und/oder in Durchlaufrichtung bewegbaren Schieber umfasst. Mit Hilfe des Schiebers können die Batterien weiterbewegt werden. Der Schieber kann beispielsweise der Oberseite der Ausrichteinheit und/oder der Siebvorrichtung zugewandte, flexible Borsten aufweisen. Durch die flexiblen Borsten kann eine Beschädigung der Batterien verhindert werden, da bei einer Beschädigung gesundheitsschädliche Stoffe aus den Batterien austreten können.

Vorteilhaft ist es auch, wenn die Ausrichteinheit und/oder die Siebvorrichtung eine Vibrationseinheit aufweist, mittels der die Ausrichteinheit und/oder die Siebvorrichtung in Vibration versetzbar ist. Dadurch verteilen sich die Batterien in der Ausrichteinheit und/oder der Siebvorrichtung und bewegen sich in Durchlaufrichtung weiter. Die Vibrationseinheit kann beispielsweise in Form eines Vibrationsmotors vorliegen.

Von Vorteil ist es, wenn die Vorrichtung zumindest eine Fördereinheit aufweist, mittels der die Batterien nach Durchlaufen der Ausrichteinheit für eine Weiterverarbeitung förderbar sind. Die Fördereinheit kann, nachdem sie die Ausrichteinheit durchlaufen haben, aufnehmen und abtransportieren. Die Fördereinheit kann beispielsweise als Förderband ausgebildet sein. Die Fördereinheit kann beispielsweise einzelne Fächer aufweisen, in die jeweils lediglich eine einzige Batterie passt. Die Fördereinheit kann derart ausgebildet sein, dass die Batterien derart aufgenommen sind, dass sie in Verarbeitungsorientierung befördert werden.

Von Vorteil ist es, wenn die Erkennungseinheit zumindest eine Kamera aufweist. Zusätzlich oder alternativ kann die Erkennungseinheit eine Messvorrichtung zum Erkennen elektrischer und/oder physikalischer Eigenschaften aufweisen. Physikalische Eigenschaften können beispielsweise ein Gewicht, eine Dichte, ein Material, eine Farbe und/oder eine Härte der Batterie sein, welche mit der Messvorrichtung erfasst werden können und anhand derer die Batteriensorte erkannt werden kann. Mit Hilfe der Messvorrichtung können zusätzlich oder alternativ auch magnetische Eigenschaften erkannt werden. Mit der Kamera und/oder der Messvorrichtung können zumindest eine Mantelfläche, eine Länge, eine Breite, eine Höhe, einen Durchmesser, eine Querschnitt, ein Gewicht, elektrische und/oder magnetische Eigenschaften zumindest einer Batterie erfasst werden. Mit Hilfe der zumindest einen Kamera können beispielsweise die Mantelflächen von zwei nebeneinander angeordneten Batterien erfasst werden. Dadurch kann beispielsweise ein Aufdruck der Batterie erfasst werden, so dass daraufhin die Batteriensorte der Batterie ermittelt werden kann. Mittels der Kamera kann beispielsweise auch die Länge, die Breite, die Höhe, der Durchmesser und/oder der Querschnitt zumindest einer Batterie ermittelt werden. Viele Batteriensorten unterscheiden sich beispielsweise durch den Durchmesser und/oder die Länge, so dass anhand der Ermittlung des Durchmessers und/oder der Länge die Batteriensorte ermittelt werden kann. Manche Batteriensorte weisen auch unterschiedliche Formen auf. So gibt es die 1,5 Volt Batterien, wie beispielsweise AAA-, Mignon-, Mono- oder Baby-Batterien, die überwiegend zylinderförmig sind, jedoch einen unterschiedlichen Durchmesser aufweisen können. Dagegen gibt es 9 Volt-Blockbatterien, die quaderförmig sind.

Zusätzlich oder alternativ können mit Hilfe der Messvorrichtung beispielsweise auch die elektrischen und/oder magnetischen Eigenschaften erfasst werden, um beispielsweise unterscheiden zu können, ob es sich um eine Einweg- oder eine wieder aufladbare Batterie handelt. Die Messvorrichtung kann beispielsweise zwei Elektroden umfassen, die die zu messende Batterie mit einer Spannung beaufschlagt, den Batteriestrom und/oder die Batteriespannung misst und daraus ermitteln kann, ob die Batterie ein Akkumulator oder eine Batterie ist, die nicht wieder aufgeladen werden kann. Mittels der Messvorrichtung können auch mehrere Batterien gleichzeitig erfasst werden.

Die Erkennungseinheit kann beispielsweise im Bereich der Ausrichteinheit angeordnet sein. Vorteilhafterweise ist die Erkennungseinheit in einem Endbereich, also in einem in Durchlaufrichtung hinterem Bereich der Ausrichteinheit, angeordnet, da dort die Batterien zumindest größtenteils in Verarbeitungsorientierung ausgerichtet sind und/oder die abzusondernde Batteriensorte abgesondert ist. Dadurch kann die Erkennungseinheit die Batterien immer in der gleichen Orientierung, der Verarbeitungsorientierung, erfassen, so dass die Messergebnisse der Erkennungseinheit zuverlässiger sind.

Vorteilhaft ist es auch, wenn die Vorrichtung eine Ablageeinheit mit mehreren Sortenbehältern aufweist, in die die erfassten Batterien entsprechend deren Batteriensorten ablegbar sind. Dabei weist natürlich die Ablageeinheit so viele Sortenbehälter auf, wie Batteriensorten der Vorrichtung zugeführt werden.

Ferner kann die Vorrichtung eine Selektiereinheit aufweisen, mittels der die Batterien entsprechend deren Batteriensorten in die Sortenbehälter ablegbar, zu den Sortenbehältern führenden Transportelementen, zur Fördereinheit und/oder von der Fördereinheit in die Sortenbehälter führbar sind. Die Transportelemente können beispielsweise Transportrinnen sein, in denen die Batterien zu den jeweiligen Sortenbehältern rutschen.

Zusätzlich oder alternativ kann die Selektiereinheit auch die Batterien zur Fördereinheit fördern. Weiterhin zusätzlich oder alternativ kann die Selektiereinheit auch die Batterien von der Fördereinheit herunternehmen, um die Batterien, nachdem sie von der Fördereinheit befördert wurden, in die jeweiligen Sortenbehälter der Ablageeinheit zu fördern. Die Fördereinheit führt somit die Batterien von der Ausrichteinheit zur Ablageeinheit.

Außerdem ist es von Vorteil, wenn die Selektiereinheit zumindest ein Aufnahmeelement aufweist, mittels dem die Batterien aufnehmbar sind und zu den Sortenbehältern, zur Fördereinheit und/oder zu den Transportelementen bringbar sind. Dabei bringt das Aufnahmeelement die Batterie gemäß der Batteriensorte zu dem entsprechenden Sortenbehälter und/oder zu dem entsprechenden Transportelement, das zum entsprechenden Behälter führt. Dadurch können die Batterien gemäß ihren Batteriensorten in die dazugehörigen Sortenbehälter abgelegt werden. Außerdem kann das Aufnahmeelement von der Steuereinheit auch derart gesteuert werden, dass es die Batterie zum entsprechenden Sortenbehälter und/oder zum entsprechenden Transportelement bringt. Die Selektiereinheit kann dazu beispielsweise Linearmotoren aufweisen, um die Batterie nach der Aufnahme bewegen zu können. Das Aufnahmeelement kann beispielsweise ein Magnetelement umfassen, das die magnetischen Batterien anziehen kann. Zusätzlich oder alternativ kann das Aufnahmeelement auch einen Greifer umfassen, um die Batterien zu greifen. Zusätzlich oder alternativ kann das Aufnahmeelement auch eine Saugeinheit umfassen, um die Batterien mittels eines Unterdrucks anzusaugen. Der Greifer und/oder die Saugeinheit können vorteilhaft sein, wenn es sich bei den Batterien um nicht-magnetische Batterien handelt, die beispielsweise zumindest teilweise aus Kunststoff sind.

Zusätzlich oder alternativ ist es von Vorteil, wenn die die Selektiereinheit zumindest eine Blaseinheit aufweist, mittels der die Batterien mit Hilfe einer Luftströmung in die Sortenbehälter, zur Fördereinheit und/oder zu den Transportelementen blasbar sind. Da nicht alle Batterien magnetische sein können, kann mit Hilfe der Blaseinheit auch diese Batteriensorte zu den Sortenbehältern, zur Fördereinheit und/oder den Transportelementen bringbar sein.

Zusätzlich oder alternativ kann die Selektiereinheit auch eine Stoßeinheit aufweisen, mittels der die Batterien zu den Sortenbehältern, zur Fördereinheit und/oder den Transportelementen stoßbar sind.

Des Weiteren ist es von Vorteil, wenn die Vorrichtung eine Steuereinheit aufweist, die derart ausgebildet ist, dass diese insbesondere anhand der von der Erkennungseinheit erfassten Batterieeigenschaften die Batteriesorte ermitteln kann. Die Steuereinheit kann dazu mit der Erkennungseinheit verbunden sein. Die Steuereinheit kann beispielsweise eine Recheneinheit aufweisen, die ein Programm ausführen kann, mit dessen Hilfe die Steuereinheit die Batteriesorte anhand von Batterieeigenschaften bzw. anhand der von der Erkennungseinheit erfassten Messdaten ermitteln kann. Die Steuereinheit kann beispielsweise anhand den von der Erkennungseinheit erstellten Bildern der Batterien Batterieeigenschaften ermitteln. Batterieeigenschaften können beispielsweise die Information auf der Mantelfläche und/oder die geometrischen Maße, wie beispielsweise die Höhe, die Breite, die Länge, den Querschnitt und/oder den Durchmesser, der Batterien umfassen, die von der Kamera der Erkennungseinheit erfasst sind. Die Steuereinheit kann beispielsweise auch eine Speichereinheit aufweisen, in der Referenzdaten von Batteriensorten abgespeichert sind. Die Referenzdaten umfassen beispielsweise die Höhe, die Breite, die Länge, den Querschnitt, den Durchmesser von den handelsüblichen und bekannten Batterien, wie beispielsweise die AAA-, die Baby-, die Mignon und die Monobatterien. Die Steuereinheit kann beispielsweise die Batterieeigenschaften mit den Referenzdaten vergleichen, um daraus die Batteriensorten zu ermitteln.

Zusätzlich oder alternativ kann die Steuereinheit derart ausgebildet sein, dass sie die Vorrichtung steuern kann. Die Steuereinheit kann beispielsweise die Vibrationseinheit, die Transporteinheit, die Wiegeeinrichtung, die Umladevorrichtung, die Fördereinheit und/oder die Selektiereinheit steuern und/oder entsprechende Daten, beispielsweise Wiegedaten der Wiegeeinrichtung, erhalten.

Vorgeschlagen wird ferner ein Verfahren zum Betreiben einer Vorrichtung zum Sortieren von Batterien. Die Vorrichtung kann zumindest ein Merkmal der vorangegangenen und/oder nachfolgenden Beschreibung aufweisen. Die Vorrichtung umfasst eine Ausrichteinheit, mittels der der Vorrichtung zugeführten Batterien in eine Verarbeitungsorientierung ausgerichtet werden, um beispielsweise die Batterien in einem automatisierten Verfahren weiterverarbeiten zu können. Bei den zugeführten Batterien kann es sich beispielsweise aus einem Gemisch aus zylindrischen Batterien, wie beispielsweise AAA-, Baby-, Mono- und Mignon-Batterien, quaderförmigen Batterien, wie 9 Volt Blockbatterien, und/oder Knopfzellen handeln, um nur einige zu nennen.

Erfindungsgemäß wird einer Verarbeitungseinheit und/oder einer Erkennungseinheit der Vorrichtung die in Verarbeitungsorientierung ausgerichteten Batterien zugeführt und die Verarbeitungseinheit und/oder die Erkennungseinheit verarbeitet und/oder erkennt die in Verarbeitungsorientierung ausgerichteten Batterien. Dadurch wird beispielsweise festgestellt, welche Batterie welcher Batteriensorte zugehört, so dass die Batterien entsprechend ihrer Batteriensorten weiterbehandelt werden können. Außerdem können beispielsweise mittels der Verarbeitungseinheit die in Verarbeitungsorientierung ausgerichteten Batterien weiterverarbeitet werden. Die Verarbeitungsorientierung kann beispielsweise eine Verpackungseinheit sein, die die in Verarbeitungsorientierung ausgerichteten Batterien verpackt. Wenn die Batterien beim Verpacken in Verarbeitungsorientierung ausgerichtet sind, spart dies Verpackungsmaterial und die Batterien können besser in dafür vorgesehene Verpackungen verpackt werden.

Die Erkennungseinheit kann ferner beispielsweise Batterieneigenschaften der Batterien erkennen, um daraus auf die Batteriensorten schließen zu können. Zu den Batterieneigenschaften gehören beispielsweise das Aussehen einer Mantelfläche, eine Länge, eine Breite, eine Höhe, ein Durchmesser, ein Querschnitt, elektrische und/oder magnetische Eigenschaften der Batterie.

Anhand zumindest einer Batterieeigenschaft kann dann die Batteriensorte ermittelt werden. Dies kann beispielsweise dadurch erfolgen, dass mit zumindest einer Kamera der Erkennungseinheit die Mantelfläche zumindest einer Batterie erfasst wird. Ist die Batterie nicht zu sehr verschmutzt, kann anhand eines Aufdrucks der Batterie die Batteriensorte ermittelt werden. Zusätzlich oder alternativ kann die Batteriensorte auch anhand der Länge, der Breite, der Höhe, des Durchmessers und/oder eines Querschnitts erkannt werden. Beispielsweise weist die Mignonbatterie, die AAA-Batterie, die Baby-Batterie und die Mono-Batterie einen runden Querschnitt auf, wohingegen eine 9 Volt Blockbatterien einen rechteckigen Querschnitt aufweist. Eine AAA-Batterie unterscheidet sich weiterhin von einer Mono-Batterie im Durchmesser, so dass infolge der Messung des Durchmessers die Batterien weiter unterschieden werden können. Um das Ermitteln der Batteriensorte zuverlässiger zu gestalten, können auch mehrere Batterieeigenschaften erkannt werden.

Vorteilhaft ist es, wenn die Vorrichtung eine Steuereinheit aufweist, die die die erfassten Batterieneigenschaften mit Referenzdaten von Batterien vergleicht und daraus die Batteriensorte ermittelt. Die Referenzdaten können beispielsweise die Batterieneigenschaften von bekannten Batteriensorten umfassen, mit denen die erfassten Batterieneigenschaften verglichen werden.

Des Weiteren ist es von Vorteil, wenn die Steuereinheit die erfassten Batterieneigenschaften zu einem Eigenschaftsvektor zusammenfasst und zu einem die Referenzdaten umfassenden Referenzvektor einen euklidischen Abstand ermittelt. Der Referenzvektor ist dabei einer bekannten Batterie bzw. einer bekannten Batteriensorte zugeordnet und enthält die Batterieeigenschaften der bekannten Batterien bzw. der bekannten Batteriensorte. Die Steuereinheit kann durch einen Vergleich der Referenzvektoren mit dem Eigenschaftsvektor ermitteln, welche Batteriensorte von der Erkennungseinheit erfasst wurde.

Dabei sind die Batterieeigenschaften in dem Eigenschaftsvektor und die Batterieeigenschaften im Referenzvektor an derselben Stelle im entsprechenden Vektor angeordnet, so dass bei einem Vergleich der Einträge des Eigenschaftsvektors und der Referenzvektors die gleichen Batterieeigenschaften verglichen werden. Der euklidische Abstand zwischen dem Eigenschaftsvektor und dem Referenzvektor kann dadurch berechnet werden, dass eine Differenz der jeweiligen Einträge gebildet wird, die jeweiligen Differenzen quadriert, aufsummiert und davon die Wurzel gezogen wird. Dieses Verfahren kann mit der folgenden Formel ausgedrückt werden:

$$A_e = \sqrt{\sum_i (y_i - x_i)^2}$$

Darin entspricht $A_e$ dem euklidischen Abstand, y dem Referenzvektor und x dem Eigenschaftsvektor entspricht. Die Steuereinheit kann für einen Eigenschaftsvektor, der die erfassten Batterieeigenschaften umfasst, den euklidischen Abstand $A_e$ zu den jeweiligen, in der Steuereinheit hinterlegten, Referenzvektoren der verschiedenen bekannten Batteriensorten ermitteln. Aus diesen mehreren euklidischen Abständen wird der mit dem geringsten Wert ermittelt. Weist der Eigenschaftsvektor beispielsweise für den Referenzvektor, der zur Mignon-Batterie gehört, den geringsten euklidischen Abstand auf, ist es am wahrscheinlichsten, dass die durch die Erkennungseinheit erfasste Batterie eine Mignon-Batterie ist. Durch die Ermittlung des euklidischen Abstands wird die Batteriensorte dadurch bestimmt, für welche bekannte Batterie die erfassten Batterieeigenschaften am nächsten kommen.

Weitere Vorteile der Erfindung sind in den nachfolgenden Ausführungsbeispielen beschrieben. Es zeigen:

Figur 1    eine perspektivisch, schematische Ansicht einer Vorrichtung zum Sortieren von Batterien mit einer Ausrichteinheit,

Figur 2    eine perspektivisch, schematische Ansicht einer Vorrichtung mit einer Ausrichteinheit, einer Siebvorrichtung und einer Transporteinheit,

Figur 3    eine perspektivisch, schematische Ansicht einer Vorrichtung mit einer Schiebereinheit,

Figur 4    eine perspektivisch, schematische Ansicht einer Vorrichtung mit zumindest einem Rückhalteelement,

Figur 5    eine perspektivisch, schematische Ansicht eines Ausschnitts einer Vorrichtung mit einer Erkennungseinheit

Figur 6    eine perspektivisch, schematische Ansicht eines Ausschnitts einer Vorrichtung mit einer Selektiereinheit und einer Ablageeinheit und

Figur 7    eine perspektivisch, schematische Ansicht eines Ausschnitts einer Vorrichtung mit einer Selektiereinheit und einer Ablageeinheit.

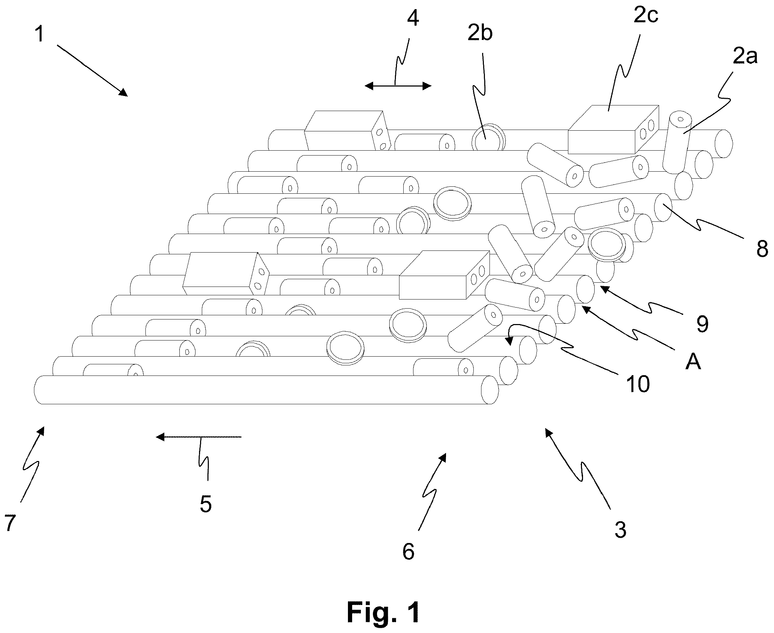

Figur 1 zeigt eine perspektivisch, schematische Ansicht einer Vorrichtung 1 zum Sortieren von Batterien 2 mit einer Ausrichteinheit 3. Die Batterien 2 können beispielsweise zylindrische Batterien 2a, wie beispielsweise AAA-Batterien, Baby-Batterien, Mono-Batterien, Mignon-Batterien oder Knopfzellen 2b, sein. Die Batterien 2 können auch 9V-Block-Batterien 2c oder 4,5V-Batterien (hier nicht gezeigt) als Batteriesorte umfassen. Der Übersichtlichkeit halber ist jeweils nur eine Batterie 2 einer Batteriensorte 2a - 2c mit einem Bezugszeichen versehen. Außerdem wird der Einfachheit halber von der Batterie 2 als Oberbegriff gesprochen. Wenn es dem Verständnis dient, wird wieder beispielsweise von der Knopfzelle 2b als Batterie 2 gesprochen.

Bei den zu sortierenden Batterien 2 kann es sich um Altbatterien handeln. Ferner kann es sich bei den Batterien 2 um Einwegbatterien oder um wiederaufladbare Batterien 2 (auch als Akku bezeichnet) handeln. Eine Sortierung der Batterien 2 kann vorteilhaft sein, um die Batterien 2 gemäß ihren Batteriensorten zu recyceln und/oder zu entsorgen. Verschiedene Batteriensorten enthalten auch unterschiedliche Stoffe und chemische Elemente, die die Umwelt und Gesundheit gefährden und im Hinblick auf eine Schonung von Ressourcen eine Quelle für Elemente darstellen können. Um die Batterien 2 vorschriftsmäßig zu entsorgen, ist es vorteilhaft, wenn sie ausgerichtet sind, um die Batterien 2 besser verarbeiten zu können. Zusätzlich oder alternativ ist es vorteilhaft, wenn die Batteriensorten sortiert sind, um die entsprechenden Entsorgungsverfahren dahingehend zu optimieren. Auch um die Batterien 2 besser recyceln zu können, ist die Sortierung vorteilhaft, um die Recycelverfahren auf die Batteriensorte zu optimieren. Zusätzlich oder alternativ können die Batterien 2 auch ausgerichtet werden, um diese weiterverarbeiten zu können.

Mit Hilfe der Ausrichteinheit 3 können die Batterien 2 in eine Verarbeitungsorientierung 4 ausgerichtet werden. Wenn die Batterien 2 in Verarbeitungsorientierung 4 ausgerichtet sind, können diese vorteilhafter weiterverarbeitet werden. Die Batterien 2 weisen somit alle die gleiche Richtung auf, was beispielsweise für eine automatisierte Weiterverarbeitung der Batterien 2 von Vorteil ist. Beispielsweise kann der Ausrichteinheit 3 eine hier nicht gezeigte Verarbeitungseinheit nachgeordnet sein, die die in Verarbeitungsorientierung 4 ausgerichteten Batterien 2 erhält. Die Verarbeitungseinheit kann beispielsweise eine Verpackungseinheit sein, die die ausgerichteten Batterien 2 in eine Verpackung verpackt. Um die Batterien 2 besser verpacken zu können, ist es dabei vorteilhaft, wenn sie alle parallel in Verarbeitungsorientierung 4 ausgerichtet sind. Infolgedessen können die Batterien 2 besser verpackt werden.

Mit Hilfe der Ausrichteinheit 3 können zusätzlich oder alternativ ein Teil der Batterien 2 abgesondert werden. Mittels der Ausrichteinheit 3 kann eine Batteriensorte der der Vorrichtung 1 zugeführten Batterien 2 abgesondert werden. Beispielsweise können die Knopfzellen 2b mit der Ausrichteinheit 3 des vorliegenden Ausführungsbeispiels abgesondert werden. Gemäß dem vorliegenden Ausführungsbeispiel können beispielsweise die Knopfzellen 2b ausgesiebt werden. Die Ausrichteinheit 3 kann somit eine Siebeinheit sein, mittels der zumindest eine Batteriensorte der der Vorrichtung 1 zugeführten Batterien 2 ausgesiebt werden kann. Die Ausrichteinheit 3 kann somit eine Sieb-/Ausrichteinheit sein, mittels der zumindest eine Batteriensorte abgesondert bzw. ausgesiebt und die zurückbleibenden Batterien 2 in Verarbeitungsorientierung 4 ausgerichtet werden. Die Ausrichteinheit 3 kann auch eine Absonder-/Ausrichteinheit sein.

Die Batterien 2 des vorliegenden Ausführungsbeispiels durchlaufen die Vorrichtung 1 ferner in einer Durchlaufrichtung 5. In einem Anfangsbereich 6 der Ausrichteinheit 3 gelangen die Batterien 2 ungerichtet in bzw. auf die Ausrichteinheit 3. Die Batterien 2 bewegen sich in Richtung der Durchlaufrichtung 5 durch die Ausrichteinheit 3, wobei zumindest eine Batteriensorte, in dem vorliegenden Ausführungsbeispiel die Knopfzellen 2b, abgesondert werden kann. Die Knopfzellen 2b können im hier gezeigten Ausführungsbeispiel durch die Ausrichteinheit 3 durchfallen. Die Ausrichteinheit 3 kann eine Siebeinheit sein. Während sich die Batterien 2 durch die Ausrichteinheit 3 bewegen, werden sie in Verarbeitungsorientierung 4 ausgerichtet. Erreichen die Batterien 2 einen Endbereich 7 der Ausrichteinheit 3, welcher auf der zum Anfangsbereich 6 gegenüberliegenden Seite der Ausrichteinheit 3 angeordnet ist, sind die Batterien 2 in Verarbeitungsorientierung 4 ausgerichtet. Zusätzlich können auch die Batterien 2 der abzusondernden Batteriensorte abgesondert sein, d.h. diese Batterien 2 erreichen nicht das Endbereich 7 der Ausrichteinheit 3.

Im vorliegenden Ausführungsbeispiel sind die Verarbeitungsorientierung 4 der Batterien 2 und die Durchlaufrichtung 5 parallel zueinander orientiert. Alternativ kann die Verarbeitungsorientierung 4 auch senkrecht zur Durchlaufrichtung 5 orientiert sein.

Gemäß dem vorliegenden Ausführungsbeispiel weist die Ausrichteinheit 3 eine Vielzahl an länglichen Profilen 8 auf. Auch hier ist wieder wegen der Übersichtlichkeit lediglich ein Profil 8 mit einem Bezugszeichen versehen. Die Profile 8 sind parallel zueinander angeordnet. Die Profile 8 weisen jeweils untereinander einen Abstand A auf, so dass zwischen jeweils zwei benachbarten Profilen 8 ein Spalt 9 ausgebildet ist. Gemäß dem vorliegenden Ausführungsbeispiel kann die Ausrichteinheit 3 ein Stangensieb sein. Mit Hilfe des Stangensiebs können die Batterien 2 in Verarbeitungsorientierung 4 ausgerichtet werden. Zusätzlich oder alternativ kann zumindest eine Batteriensorte der Batterien 2 mit Hilfe des Stangensiebs abgesondert bzw. ausgesiebt werden.

Zwischen jeweils zwei Profilen 8 ist im vorliegenden Ausführungsbeispiel im Bereich des Spalts 9 eine Vertiefung 10 angeordnet. Der Einfachheit ist wieder lediglich eine Vertiefung 10 mit einem Bezugszeichen versehen. Die Vertiefungen 10 sind länglich, insbesondere parallel zu den Profilen 8 orientiert, ausgebildet. Zusätzlich oder alternativ erstrecken sich die Vertiefungen 10 in Durchlaufrichtung 5 in der Ausrichteinheit 3. Die Batterien 2 rutschen dabei in die Vertiefungen 10 hinein, so dass sie sich in Verarbeitungsorientierung 4 ausrichten. Die Ausrichtung der Profile 8 bestimmt somit die Orientierung der Vertiefungen 10, was wiederum die Verarbeitungsorientierung 4 vorgibt.

Der Abstand A kann dabei höchstens 8 mm betragen, so dass die Knopfzellen 2b zwischen den Profilen 8 hindurchfallen können. Die restlichen Batterien 2, wie beispielsweise die zylindrischen Batterien 2a und die 9V-Blöcke 2c, werden dagegen von den Profilen 8 zurückgehalten. Die zylindrischen Batterien 2a und die 9V-Blöcke 2c können aufgrund ihrer Größe nicht zwischen den Profilen 8 hindurchfallen. Vorteilhafterweise weist der Spalt 9 jedoch einen derartigen Abstand A auf, dass die abzusondernde Batteriesorte durch die Profile 8 hindurchfallen kann, die Batterien der Batteriensorte, die nicht abgesondert werden soll, jedoch nicht hindurchfallen. Dadurch kann mit Hilfe der Ausrichteinheit 3 auch die abzusondernde Batteriensorte abgesondert werden. Die Ausrichteinheit 3 ist dann eine Absonder-/Ausrichteinheit. Wenn die Batterien 2, wie gemäß Figur 1 beschrieben ist, durch die Profile 8 hindurchfallen, ist die Ausrichteinheit 3 eine Siebeinheit, mittels der die Batterien 2 auch ausgerichtet werden können. Die Ausrichteinheit 3 ist dann eine Sieb-/Ausrichteinheit.

Gemäß dem vorliegenden Ausführungsbeispiel weisen die Profile 8 einen runden Querschnitt auf. Zusätzlich oder alternativ kann auch zumindest ein Teil der Profile 8 einen anderen Querschnitt aufweisen. Die Profile 8 können beispielsweise einen dreieckigen, einen pyramidenförmigen, eine auf der Spitze stehende Rechteck- oder Parallelogrammform aufweisen. Zusätzlich oder alternativ können zwei benachbarte Profile 8 auch verschiede Querschnitte aufweisen. Die Querschnitte sind dabei derart ausgebildet, dass die Batterien 2 durch die Vertiefungen 10 zwischen den Profilen 8 ausgerichtet werden. Die Ausrichteinheit 3 kann ein Stangensieb sein.

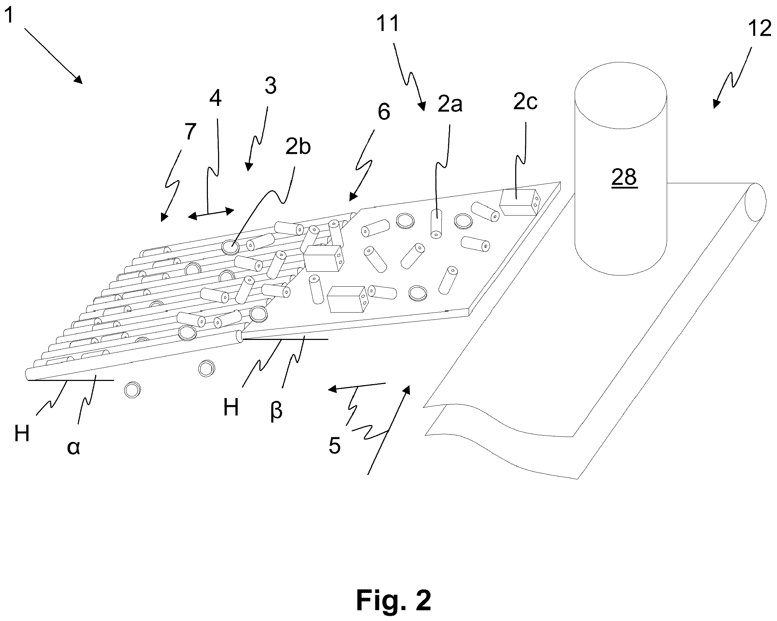

Figur 2 zeigt eine perspektivisch, schematische Ansicht einer Vorrichtung 1 mit der Ausrichteinheit 3, einer Siebvorrichtung 11 und einer Transporteinheit 12. Die Durchlaufrichtung 5 der Batterien 2 ist im vorliegenden Ausführungsbeispiel zweigeteilt. Die Batterien 2 werden im vorliegenden Ausführungsbeispiel in Batteriebehälter 28 mittels der Transporteinheit 12 antransportiert. Zusätzlich oder alternativ können die Batterien 2 auch auf der Transporteinheit 12 liegen. Die Transporteinheit 12 kann gemäß Figur 2 ein Transportband sein.

Mittels einer hier nicht gezeigten Umladevorrichtung können die Batteriebehälter 28 und/oder die auf der Transporteinheit 12 liegenden Batterien 2 zu einer Siebvorrichtung 11 geführt werden. Befinden sich die Batterien 2 in dem Batterienbehälter 28, kann die Umladevorrichtung die Batterien 2 auf die Siebvorrichtung 11 schütten. Zusätzlich oder alternativ kann die Umladeeinheit die Batterien 2 auch auf die Ausrichteinheit 3 schütten. Auf der Siebvorrichtung 11 liegen die Batterien 2 ungeordnet. Mit Hilfe der Siebvorrichtung 11 können beispielsweise kleine Gegenstände, wie Verschmutzungen, und/oder Wasser von den Batterien 2 abgesondert werden. Die Siebvorrichtung 11 kann beispielsweise hier nicht gezeigte Löcher aufweisen, durch die Schmutzpartikel und/oder das Wasser hindurchfallen, die Batterien 2 jedoch zurückgehalten werden. Die Siebvorrichtung 11 kann beispielsweise ein Lochblech umfassen. Zusätzlich oder alternativ kann die Siebvorrichtung 11 auch eine hier nicht gezeigte Rinne aufweisen, in der das Wasser, vorzugsweise mit den Verschmutzungen der Batterien 2, gesammelt und abgeführt wird. Die Rinne kann beispielsweise in einem niedrigsten Bereich der Siebvorrichtung 11 angeordnet sein, so dass das Wasser von selbst bzw. schwerkraftbedingt in die Rinne läuft. Die Rinne kann beispielsweise benachbart zum Anfangsbereich 6 der Ausrichteinheit 3 angeordnet sein.

Nachdem die Batterien 2 in Durchlaufrichtung 5 über die Siebvorrichtung 11 hinweg gelangt sind, gelangen sie zur Ausrichteinheit 3. Im Anfangsbereich 6 der Ausrichteinheit 3 sind die Batterien 2 noch unsortiert, d.h. nicht ausgerichtet und die abzusondernde Batteriensorte ist noch nicht abgesondert, wenn mit der Ausrichteinheit 3 die abzusondernde Batteriensorte abgesondert werden soll. Gemäß dem vorliegenden Ausführungsbeispiel der Figur 2 können die Knopfzellen 2b abgesondert werden, wobei sie durch die Ausrichteinheit 3 durchfallen. Die restlichen Batterien 2 werden durch die Ausrichteinheit 3 in Verarbeitungsorientierung 4 ausgerichtet. Am Endbereich 7 der Ausrichteinheit 3 sind die Batterien 2 ausgerichtet und können dadurch insbesondere automatisiert weiterverarbeitet werden. Die Batterien 2 können aber auch lediglich in Verarbeitungsorientierung 4 ausgerichtet werden. Beispielsweise kann nach der Ausrichteinheit 3 die hier nicht gezeigte Verarbeitungseinheit angeordnet sein.

Des Weiteren ist die Siebvorrichtung 11 in einem zweiten Winkel β gegenüber einer Horizontalen H geneigt. Die Horizontale H ist dabei senkrecht zur Schwerkraftsrichtung orientiert. Durch die Neigung der Siebvorrichtung 11 bewegen sich somit die Batterien 2 im Wesentlichen selbstständig in Richtung Ausrichteinheit 3. Dabei kann der zweite Winkel β auch größer oder kleiner sein, je nachdem ob und wie schnell sich die Batterien 2 auf der Siebvorrichtung 11 bewegen sollen.

Zusätzlich oder alternativ kann gemäß dem vorliegenden Ausführungsbeispiel die Ausrichteinheit 3 in einem ersten Winkel α gegenüber der Horizontalen H geneigt sein. Dadurch können sich die Batterien 2 durch die Schwerkraft in Durchlaufrichtung 5 durch die Ausrichteinheit 3 bewegen. Auch hier kann der erste Winkel α eingestellt werden, so dass die Batterien 2 sich selbstständig durch die Ausrichteinheit 3 bewegen.

Vorteilhafterweise kann die Siebvorrichtung 11 und/oder die Ausrichteinheit 3 auch eine hier nicht gezeigte Vibrationseinheit aufweisen, mittels der die Siebvorrichtung 11 und/oder die Ausrichteinheit 3 in Vibration versetzt werden kann. Dadurch kann die Bewegung, das Absondern, das Ausrichten und/oder das Sortieren der Batterien 2 unterstützt werden.

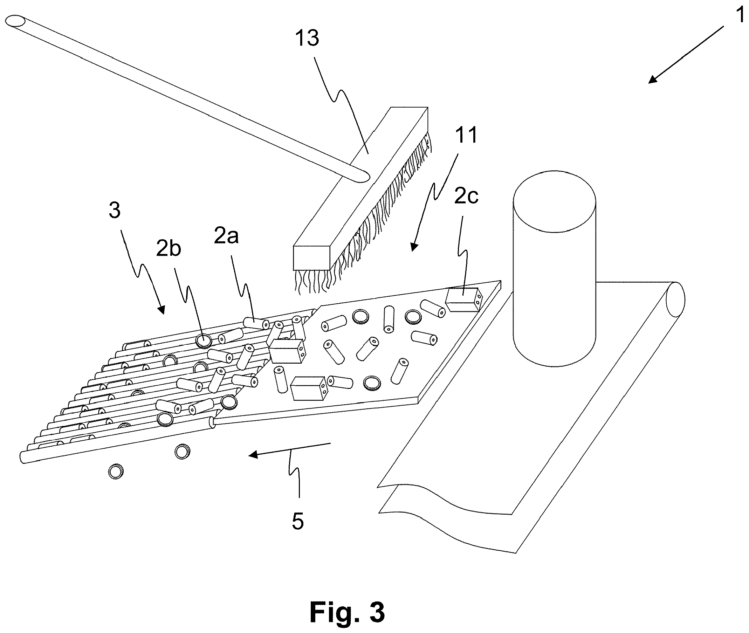

Figur 3 zeigt ein Ausführungsbeispiel der Vorrichtung 1 mit einer Schiebereinheit 13. Der Einfachheit halber werden in dieser Figur lediglich die zum Verständnis relevanten Merkmale mit einem Bezugszeichen versehen. Mit Hilfe der Schiebereinheit 13 können die Batterien 2 in Durchlaufrichtung 5 zumindest teilweise durch die Vorrichtung 1 geschoben und/oder gezogen werden. Gemäß dem vorliegenden Ausführungsbeispiel kann die Schiebereinheit 13 die Batterien 2 von der Siebvorrichtung 11 zur Ausrichteinheit 3 schieben. Dies kann vorteilhaft sein, wenn sich die Batterien 2 in einem Bereich anhäufen bzw. verklumpen.

Die Schiebereinheit 13 weist im vorliegenden Ausführungsbeispiel eine Besenform auf. Zusätzlich oder alternativ kann die Schiebereinheit 13 auch ein Gitter oder eine Rechenform aufweisen, um die Batterien 2 weiterzuschieben.

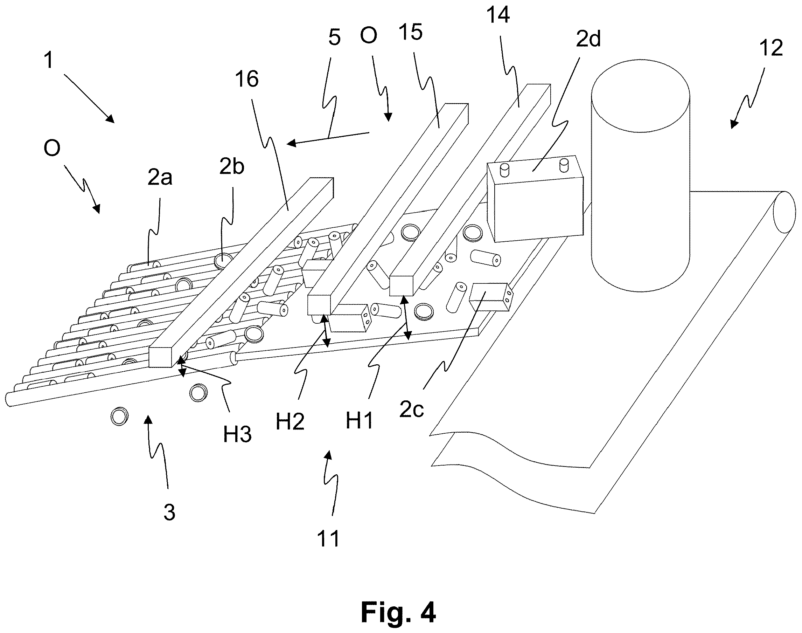

Figur 4 zeigt ein weiteres Ausführungsbeispiel einer Vorrichtung 1 mit zumindest einem Rückhalteelement 14 - 16. Der Einfachheit halber werden in dieser Figur lediglich die zum Verständnis relevanten Merkmale mit einem Bezugszeichen versehen. Die Rückhalteelemente 14 - 16 sind im vorliegenden Ausführungsbeispiel über der Siebvorrichtung 11 und/oder über der Ausrichteinheit 3 angeordnet. Die Rückhalteelemente 14 - 16 sind über einer Oberseite O der Siebvorrichtung 11 und/oder der Ausrichteinheit 3 angeordnet. Das erste Rückhalteelement 14 und das zweite Rückhalteelement 15 sind über der Siebvorrichtung 11 und das dritte Rückhalteelement 16 ist über der Ausrichteinheit 3 angeordnet. Ferner weist das erste Rückhalteelement 14 eine erste Höhe H1 und das zweite Rückhalteelement 15 eine zweite Höhe H2 über der Siebvorrichtung 11 auf. Das dritte Rückhalteelement 16 weist eine Höhe H3 über der Ausrichteinheit 3 auf. Die jeweiligen Höhen H1 - H3 sind dabei derart zu verstehen, dass sie der geringste Abstand zwischen der Siebvorrichtung 11 bzw. der Ausrichteinheit 3 und dem jeweiligen Rückhalteelement 14 - 16 sind.

Die Rückhalteelemente 14 - 16 sind des Weiteren derart angeordnet, dass sie abgestuft sind. Die Höhen H1 - H3 verringern sich von Rückhalteelement 14 - 16 zu Rückhalteelement 14 - 16 in Durchlaufrichtung 5. Die Höhe H1 ist größer als die Höhe H2. Die Höhe H2 ist wieder größer als die Höhe H3. Es gilt somit H1 > H2 > H3. Zusätzlich oder alternativ können auch zwei Höhen H1, H2, H3 gleich sein. Durch die Abstufung können größere Gegenstände von den Rückhalteelementen 14 - 16 zurückgehalten werden. Gemäß dem vorliegenden Ausführungsbeispiel wird beispielsweise eine Autobatterie 2d bereits am ersten Rückhalteelement 14 zurückgehalten. Kleinere Gegenstände können unter dem ersten Rückhalteelement 14 durchrutschen und werden beispielsweise vom zweiten Rückhalteelement 15 zurückgehalten, wenn sie größer sind als die zweite Höhe H2. Mit Hilfe des dritten Rückhalteelements 16 können noch kleinere Gegenstände zurückgehalten werden. Die Rückhalteelemente 14 - 16 weisen jedoch eine Höhe H1 - H3 auf, dass die zu sortierenden Batterien 2a - 2c unter den Rückhalteelementen 14 - 16 hindurch gelangen können. Die zu sortierenden Batterien 2a - 2c werden somit nicht von den Rückhalteelementen 14 - 16 zurückgehalten. Die von den jeweiligen zurückgehaltenen Gegenstände, wie beispielsweise die Autobatterie 2d, sammeln sich vor den Rückhalteelementen 14 - 16 und können von dort aussortiert werden. Dazu kann die Vorrichtung 1 beispielsweise einen hier nicht gezeigten Schieber aufweisen, die die vor den Rückhalteelementen 14 - 16 gesammelten Gegenstände seitlich von der Siebvorrichtung 11 und/oder der Ausrichteinheit 3 wegschiebt.

Zusätzlich oder alternativ kann ein hier nicht gezeigtes Rückhalteelement auch über der Transporteinheit 12 angeordnet sein, um bereits dort größere Gegenstände zurückhalten zu können. Dies ist natürlich nur dann sinnvoll, wenn die Batterien 2 direkt auf der Transporteinheit 12 liegen.

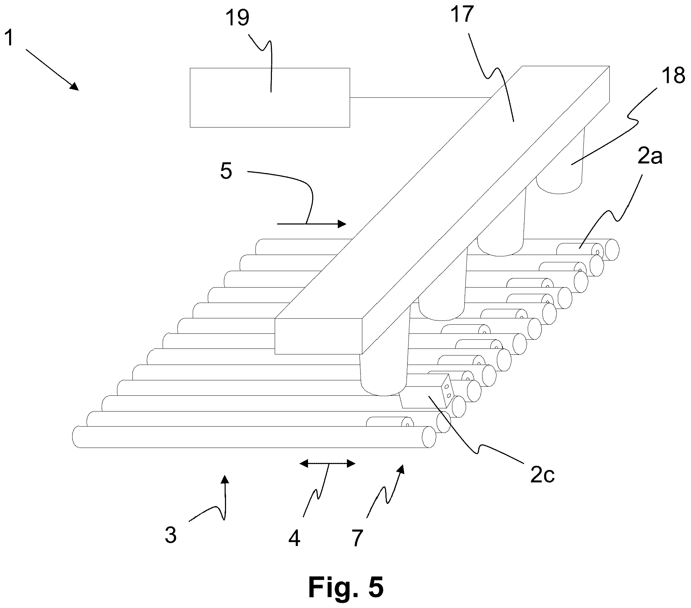

Figur 5 zeigt eine perspektivisch, schematische Ansicht der Vorrichtung 1 mit der Ausrichteinheit 3 und einer Erkennungseinheit 17. Die Erkennungseinheit 17 ist in diesem Ausführungsbeispiel im Endbereich 7 der Ausrichteinheit 3 angeordnet. Dies ist vorteilhaft, da die Batterien 2, wie hier die zylindrischen Batterien 2a und die 9V-Blöcke 2c, in Verarbeitungsorientierung 4 ausgerichtet sind, so dass diese vorteilhafter erfasst werden können. Kann mit der Ausrichteinheit 3 auch zumindest eine Batteriesorte, beispielsweise die Knopfzellen 2b, abgesondert werden, sind diese bereits abgesondert, wenn die Batterien 2 die Erkennungseinheit 17 erreichen. Dadurch kann die Erkennungseinheit 17 auf die zurückgebliebenen Batterien 2 optimiert werden.

Durch das Ausrichten der Batterien 2 mittels der Ausrichteinheit 3, kann die Erkennungseinheit 17 somit die zu vermessenden Batterien 2a, 2c in derselben Verarbeitungsorientierung 4 erfassen.

Die Erkennungseinheit 17 weist im vorliegenden Ausführungsbeispiel zumindest eine Kamera 18 auf. Die Erkennungseinheit 17 weist hier beispielhaft vier Kameras 18 auf, wovon der Einfachheit halber lediglich eine Kamera 18 mit einem Bezugszeichen versehen ist.

Die Kamera 18 kann derart angeordnet sein, dass sie zumindest eine Batterie 2a, 2c erfassen kann. Vorteilhafterweise kann die Kamera 18 mindestens zwei nebeneinander angeordnete Batterien 2a, 2c gleichzeitig erfassen, so dass eine Erfassungsrate der Batterien 2 erhöht ist. Die Kamera 18 kann somit Batterieeigenschaften der Batterien 2 erfassen.

Die Erkennungseinheit 17 kann aber auch eine hier nicht gezeigte Messvorrichtung aufweisen, mittels der elektrische und/oder magnetische Eigenschaften der Batterien 2 erfasst werden können. Die Messvorrichtung kann beispielsweise Elektroden umfassen, die einen elektrischen Kontakt zu den Batterien 2 herstellen, um die elektrischen und/oder magnetischen Eigenschaften der Batterien 2 erfassen zu können.

Die Erkennungseinheit 17 ist in dem hier beschriebenen Ausführungsbeispiel mit einer Steuereinheit 19 der Vorrichtung 1 verbunden, mit welcher die Batterieeigenschaften der Batterien 2 ausgewertet und die Batteriensorten ermittelt werden können. Zusätzlich oder alternativ kann auch die Messvorrichtung mit der Steuereinheit 19 verbunden sein.

Die Steuereinheit 19 kann beispielsweise eine hier nicht gezeigte Recheneinheit aufweisen, welche ein Auswertprogramm ausführen kann, mittels dem die Batteriensorte ermittelt werden kann. Die Steuereinheit 19 bzw. die Recheneinheit kann beispielsweise die von der Erkennungseinheit 17 erhaltenen Messdaten auswerten. Beispielsweise erhält die Steuereinheit 19 von der Erkennungseinheit 17 Bilder der Batterien 2, die von der zumindest einen Kamera 18 erfasst ist.

Die Steuereinheit 19 bzw. die Recheneinheit kann aus den mit der Kamera 18 erfassten Bildern der Batterien 2 eine Mantelfläche der Batterien 2 auswerten. Anhand eines Aufdrucks auf der Mantelfläche kann beispielsweise die Batteriensorte ermittelt werden.

Zusätzlich oder alternativ kann anhand der erfassten Bilder auch eine geometrische Form der Batterien 2 ermittelt werden. Vorteilhafterweise kann beispielsweise eine Höhe, eine Breite, eine Länge, ein Querschnitt, eine Form und/oder ein Durchmesser der Batterien 2 ermittelt werden. Mittels eines Vergleichs von in der Steuereinheit 19 hinterlegten Referenzdaten von bekannten Batteriensorten kann so die Batteriensorte der erfassten Batterien 2 ermittelt werden. Die Referenzdaten von bekannten Batteriensorten können beispielsweise in einer hier nicht gezeigten Speichereinheit der Steuereinheit 19 gespeichert sein. Die Steuereinheit 19 kann beispielsweise auch eine hier nicht gezeigte Datenschnittstelle aufweisen, mittels der neue Referenzdaten von neuen Batteriensorten in der Steuereinheit 19, insbesondere in der Speichereinheit, abgespeichert werden können.

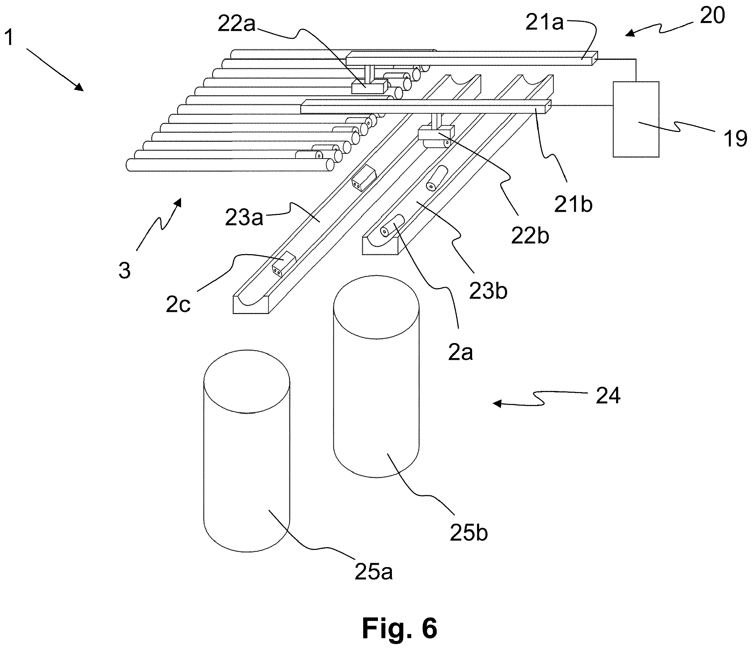

Figur 6 zeigt eine perspektivische, schematische Ansicht der Vorrichtung 1 mit einer Selektiereinheit 20, Transportelementen 23 und einer Ablageeinheit 24 mit Sortenbehältern 25. Die Selektiereinheit 20 ist in diesem Ausführungsbeispiel nach der Ausrichteinheit 3 angeordnet, so dass sie die Batterien 2 gemäß deren Batteriensorten weiterverarbeiten kann.

Nachdem die Batteriensorten der Batterien 2 mit Hilfe der Erkennungseinheit 17 und/oder der Steuereinheit 19 ermittelt ist, können mit Hilfe der Selektiereinheit 20 die Batterien 2 gemäß deren Batteriensorten weiterverarbeitet werden. Die Selektiereinheit 20 weist dazu in dem hier gezeigten Ausführungsbeispiel zumindest eine Führungseinheit 21a, 21b auf. Die Selektiereinheit 20 umfasst ferner zumindest eine Aufnahmeeinheit 22a, 22b, mittels der die Batterien 2 aufgenommen werden können. Die Aufnahmeeinheit 22a, 22b kann beispielsweise ein Magnetelement aufweisen, so dass die Batterien 2 mittels Magnetkraft aufgenommen werden können. Die Aufnahmeeinheit 22a, 22b kann zusätzlich oder alternativ auch einen Greifer und/oder eine Saugeinheit aufweisen, um die Batterien 2 aufzunehmen.

In dem hier gezeigten Ausführungsbeispiel weist die Selektiereinheit 20 zwei Führungseinheiten 21a, 21b auf, wobei jede Führungseinheit 21a, 21b eine Aufnahmeeinheit 22a, 22b aufweist. Die Selektiereinheit 20 kann natürlich auch mehr Führungseinheiten 21a, 21b mit jeweils einem Aufnahmeeinheit 22a, 22b aufweisen. Die Anzahl kann sich nach der Größe der Ausrichteinheit 3 richten.

Die Führungseinheiten 21a, 21b können beispielsweise, gemäß dem vorliegenden Ausführungsbeispiel, als Führungsschiene mit einem Linearmotor ausgebildet sein. Mit Hilfe der Führungseinheiten 21a, 21b können die Aufnahmeeinheiten 22a, 22b geführt werden, um die aufgenommenen Batterien 2 weiter zu transportieren. Die Führungseinheiten 21a, 21b können zusätzlich oder alternativ auch einen schwenkbaren Arm umfassen, mit denen die Aufnahmeeinheiten 22a, 22b zur Aufnahme der Batterien 2 zur Ausrichteinheit 3 geschwenkt werden.

Die Selektiereinheit 20 kann dabei vorteilhafterweise von der Steuereinheit 19 gesteuert werden. Da die Steuereinheit 19 mit Hilfe der Erkennungseinheit 17 die Batteriensorte der Batterien 2 kennt, kann die Steuereinheit 19 die Selektiereinheit 20 entsprechend steuern.

Wenn die Batterien 2 mit Hilfe der Aufnahmeeinheiten 22a, 22b aufgenommen sind, können die Batterien 2 gemäß deren Batteriensorten zu Transportelementen 23a, 23b geführt werden. Die Transportelemente 23a, 23b transportieren die Batterien 2 zu einer Ablageeinheit 24, die in diesem Ausführungsbeispiel zwei Sortenbehälter 25a, 25b umfasst.

Die Transportelemente 23a, 23b sind im vorliegenden Ausführungsbeispiel als Rinnen ausgebildet, die geneigt sein können, so dass die Batterien 2 in den Transportelementen 23a, 23b zu den Sortenbehältern 25a, 25b rutschen können.

Nimmt, wie in Figur 6 gezeigt ist, die Aufnahmeeinheit 22b beispielsweise die Batterie 2 auf, kennt die Steuereinheit 19 die Batteriensorte der Batterie 2. Bei der durch die Aufnahmeeinheit 22b aufgenommenen Batterie handelt es sich beispielsweise um eine AAA-, eine Mono-, eine Baby- oder eine Mignonbatterie. Entsprechend der Batteriensorte steuert die Steuereinheit 19 die Führungseinheit 21b derart, dass diese die Batterie 2 zum Transportelement 23b führt. Dort kann die Aufnahmeeinheit 22b die Batterie 2a ablegen, so dass das Transportelement 23b die zylindrische Batterie 2a zum Sortenbehälter 25b transportiert. Die Batterien 2a fallen dabei gemäß dem vorliegenden Ausführungsbeispiel von dem Transportelement 23b in den Sortenbehälter 25b. Dabei wird zu jedem Transportelement 23a, 23b jeweils lediglich eine Batteriensorte geführt, um die Batterien 2 entsprechend deren Batteriensorten in die Sortenbehälter 25a, 25b abzulegen.

Zusätzlich oder alternativ können die Führungseinheiten 21a, 21b die Aufnahmeeinheiten 22a, 22b mit den aufgenommenen Batterien 2 auch direkt zu den entsprechenden Sortenbehältern 25a, 25b führen.

Zusätzlich oder alternativ kann die Selektiereinheit 20 auch zumindest eine, hier nicht gezeigte, Blaseinheit aufweisen, mittels der die Batterien 2 von der Ausrichteinheit 3 zu den Transportelementen 23a, 23b und/oder in die Sortenbehälter 25a, 25b blasbar sind.

Zusätzlich oder alternativ kann die Selektiereinheit 20 auch zumindest eine, hier nicht gezeigte, Stoßeinheit aufweisen, mittels der die Batterien 2 von der Ausrichteinheit 3 zu den Transportelementen 23a, 23b und/oder in die Sortenbehälter 25a, 25b stoßbar sind.

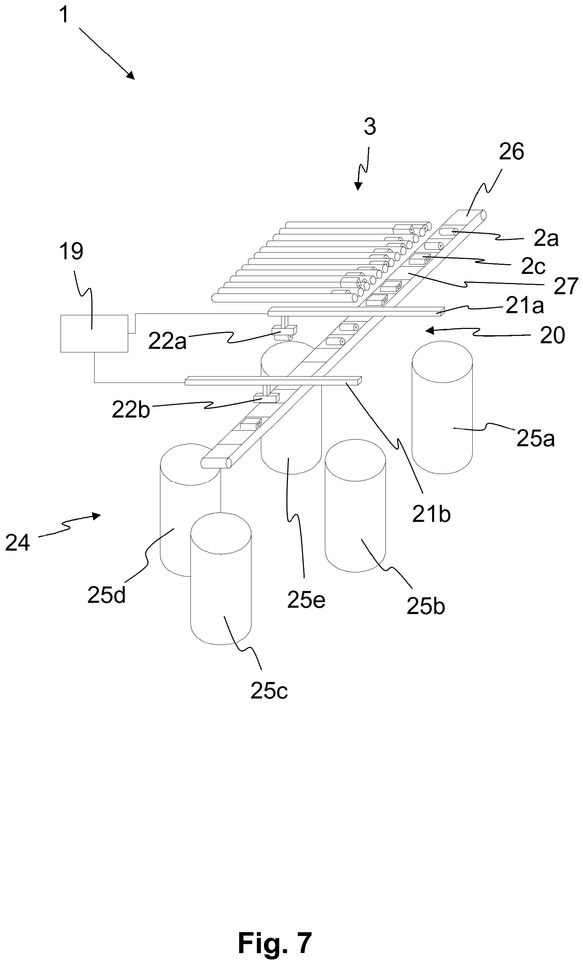

Figur 7 zeigt ein weiteres Ausführungsbeispiel der Vorrichtung 1 mit einer Fördereinheit 26, die die Batterien 2 zur Ablageeinheit 24 fördert. Die Fördereinheit 26 weist hier die Form eines Förderbandes auf. Die Fördereinheit 26 weist in diesem Ausführungsbeispiel Fächer 27 auf, in denen eine Batterie 2 abgelegt werden kann. In den Fächern 27 befindet sich somit lediglich eine Batterie 2 von einer bekannten Batteriensorte. Im Bereich der Fördereinheit 26 ist die Selektiereinheit 20 angeordnet, die die Batterien 2 anhand deren Batteriensorten in die Sortenbehälter 25a - 25e ablegt. Die Selektiereinheit 20 nimmt dabei mit Hilfe der Aufnahmeeinheiten 22a, 22b eine Batterie 2 von einer bekannten Batteriensorte auf und führt sie mittels der Führungseinheiten 21a, 21b zu den Sortenbehältern 25a, 25b, 25d, 25e. Eine Batteriensorte kann gemäß dem vorliegenden Ausführungsbeispiel auch auf der Fördereinheit 26 verbleiben. Die Batterien 2 dieser Batteriensorte fällt am Ende der Fördereinheit 26 in den Sortenbehälter 25c.

Zusätzlich oder alternativ kann die Selektiereinheit 20 auch zumindest eine hier nicht gezeigte Blaseinheit und/oder Stoßeinheit aufweisen, mittels der die Batterien 2 von der Fördereinheit 26 in die jeweiligen Sortenbehälter 25a - 25e geblasen und/oder gestoßen werden können.

Die vorliegende Erfindung ist nicht auf die dargestellten und beschriebenen Ausführungsbeispiele beschränkt. Abwandlungen im Rahmen der Patentansprüche sind ebenso möglich wie eine Kombination der Merkmale, auch wenn diese in unterschiedlichen Ausführungsbeispielen dargestellt und beschrieben sind.

**Bezugszeichenliste**

| | |
|---|---|
| 1 | Vorrichtung |
| 2a | zylindrische Batterien |
| 2b | Knopfzellen |
| 2c | 9V-Block |
| 2d | Autobatterie |
| 3 | Ausrichteinheit |
| 4 | Verarbeitungsorientierung |
| 5 | Durchlaufrichtung |
| 6 | Anfangsbereich |
| 7 | Endbereich |
| 8 | Profile |
| 9 | Spalt |
| 10 | Vertiefung |
| 11 | Siebvorrichtung |
| 12 | Transporteinheit |
| 13 | Schiebereinheit |
| 14 | erstes Rückhalteelement |
| 15 | zweites Rückhalteelement |
| 16 | drittes Rückhalteelement |
| 17 | Erkennungseinheit |
| 18 | Kamera |
| 19 | Steuereinheit |
| 20 | Selektiereinheit |
| 21 | Führungseinheit |
| 22 | Aufnahmeeinheit |
| 23 | Transportelement |
| 24 | Ablageeinheit |
| 25 | Sortenbehälter |
| 26 | Fördereinheit |
| 27 | Fach |
| 28 | Batteriebehälter |
| | |
| A | Abstand |
| H | Horizontale |
| α | erster Winkel |
| β | zweiter Winkel |
| H1 | erste Höhe |
| H2 | zweite Höhe |
| H3 | dritte Höhe |
| O | Oberseite |

**Patentansprüche**

1. Vorrichtung (1) zum Sortieren und/oder Verarbeiten von Batterien (2) mit
einer Ausrichteinheit (3), mittels der der Vorrichtung (1) zugeführte Batterien (2) in eine Verarbeitungsorientierung (4) ausrichtbar sind, **dadurch gekennzeichnet, dass**

die Vorrichtung (1) eine Verarbeitungseinheit und/oder eine Erkennungseinheit (17) aufweist, die derart angeordnet ist, dass dieser die in Verarbeitungsorientierung (4) ausgerichteten Batterien (2) zuführbar sind, und die die in Verarbeitungsorientierung (4) ausgerichteten Batterien (2) verarbeiten und/oder erkennen kann.

2. Vorrichtung (1) nach dem vorherigen Anspruch, **dadurch gekennzeichnet, dass** die Ausrichteinheit (3) derart ausgebildet ist, dass mittels dieser zumindest eine Batteriensorte und/oder Fremdstoffe von den der Vorrichtung (1) zugeführten Batterien (2) absonderbar ist und/oder die Ausrichteinheit (3) ein Stangensieb aufweist und/oder eine Vielzahl länglicher und/oder parallel zueinander angeordnete Profile (8) umfasst, wobei jeweils zwei zueinander benachbarte Profile (8) einen Abstand (A) aufweisen, so dass die abzusondernde Batteriensorte zwischen den Profilen (8) durchfallen kann.

3. Vorrichtung (1) nach einem der vorherigen Ansprüche, **dadurch gekennzeichnet, dass** die Vorrichtung (1) eine Siebvorrichtung (11) aufweist, die insbesondere in einer Durchlaufrichtung (5) der Batterien (2) vor der Ausrichteinheit (3) angeordnet ist, und/oder
dass die Vorrichtung (1) eine Transporteinheit (12) aufweist, mittels der die Batterien (2) und/oder Batteriebehälter (28) mit Batterien (2) zur Ausrichteinheit (3) und/oder zur Siebvorrichtung (11) transportierbar sind, und/oder
dass mittels einer Umladevorrichtung der Vorrichtung (1) die Batterien (2) von der Transporteinheit (12) und/oder die in Batteriebehältern (13) angeordneten Batterien (2) zur Siebvorrichtung (11) und/oder zur Ausrichteinheit (3) umladbar sind.

4. Vorrichtung (1) nach einem der vorherigen Ansprüche, **dadurch gekennzeichnet, dass** zumindest ein Rückhalteelement (14, 15, 16) in einer Höhe (H1, H2, H3) von einer Oberseite (O) der Ausrichteinheit (3) und/oder der Siebvorrichtung (11) beabstandet angeordnet ist, das sich vorzugsweise quer zur Ausrichteinheit (3) und/oder der Siebvorrichtung (11) erstreckt und/oder höhenverstellbar ist.

5. Vorrichtung (1) nach einem der vorherigen Ansprüche, **dadurch gekennzeichnet, dass** über der Oberseite (O) der Ausrichteinheit (3) und/oder der Siebvorrichtung (11) mehrere in einer Durchlaufrichtung (5) der Batterien (2) voneinander beabstandete Rückhalteelemente (14, 15, 16) angeordnet sind, wobei die Höhen (H1, H2, H3) der Rückhalteelemente (14, 15, 16) zueinander abgestuft sind und/oder sich zueinander in Durchlaufrichtung (5) verringern.

6. Vorrichtung (1) nach einem der vorherigen Ansprüche, **dadurch gekennzeichnet, dass** die Ausrichteinheit (3) und/oder die Siebvorrichtung (11) gegenüber einer Horizontalen (H) um einen Winkel (α, β) geneigt ist, so dass Ausrichteinheit (3) und/oder die Siebvorrichtung in Durchlaufrichtung (5) abfällt.

7. Vorrichtung (1) nach einem der vorherigen Ansprüche, **dadurch gekennzeichnet, dass** die Vorrichtung (1) eine Schiebereinheit (13) aufweist, mittels der die Batterien (2) zumindest in der Ausrichteinheit (3) und/oder der Siebvorrichtung (11) in Durchlaufrichtung (5) der Batterien (2) und/oder von der Transporteinheit (12) zur Siebvorrichtung (11) und/oder zur Ausrichteinheit (3) verschiebbar sind.

8. Vorrichtung (1) nach einem der vorherigen Ansprüche, **dadurch gekennzeichnet, dass** die Vorrichtung (1) zumindest eine Fördereinheit (26) aufweist, mittels der die Batterien (2) nach Durchlaufen der Ausrichteinheit (3) für eine Weiterverarbeitung förderbar sind.

9. Vorrichtung (1) nach einem der vorherigen Ansprüche, **dadurch gekennzeichnet, dass** die Erkennungseinheit (17) zumindest eine Kamera (18) und/oder eine Messvorrichtung zum Erkennen elektrischer und/oder physikalischer Eigenschaften der Batterien umfasst, so dass mittels der Erkennungseinheit (17) Batterieeigenschaften zumindest einer Batterie (2) erkennbar sind.

10. Vorrichtung (1) nach einem der vorherigen Ansprüche, **dadurch gekennzeichnet, dass** die Vorrichtung (1) eine Ablageeinheit (24) mit mehreren Sortenbehältern (25a - 25e) aufweist, in die die erkannten Batterien (2) entsprechend deren Batteriesorten ablegbar sind, und/oder dass die Vorrichtung (1) eine Selektiereinheit (20) aufweist, mittels der die Batterien (2) entsprechend deren Batteriesorten in die Sortenbehälter (25a - 25e), zu Sortenbehälter (25a - 25e) führenden Transportelementen (23a, 23b), zur Fördereinheit (26) und/oder von der Fördereinheit (26) in die Sortenbehälter (25a - 25e) führbar sind.

11. Vorrichtung (1) nach einem der vorherigen Ansprüche, **dadurch gekennzeichnet, dass** die Selektiereinheit (20) zumindest ein, insbesondere ansteuerbares, Aufnahmeelement (22a, 22b) aufweist, mittels dem die Batterien (2) aufnehmbar und zu den Sortenbehältern (25a - 25e), zur Fördereinheit (26) und/oder zu den Transportelementen (23a, 23b) bringbar sind, und/oder dass die Selektiereinheit (20) zumindest eine Blaseinheit aufweist, mittels der die Batterien (2) mit Hilfe einer Luftströmung in die Sortenbehälter (25a - 25e), zur Fördereinheit (26) und/oder zu den Transportelementen (23a, 23b) blasbar sind und/oder dass die Selektiereinheit (20) zumindest eine Stoßeinheit aufweist, mittels der die Batterien (2) in die Sortenbehälter (25a - 25e), zur Fördereinheit (26) und/oder zu den Transportelementen (23a, 23b) stoßbar sind.

12. Vorrichtung (1) nach einem der vorherigen Ansprüche, **dadurch gekennzeichnet, dass** die Vorrichtung (1) eine Steuereinheit (19) aufweist, die mit der Erkennungseinheit (17) verbunden und/oder derart ausgebildet ist, dass diese, insbesondere anhand der Batterieeigenschaften, die Batteriesorte ermitteln kann, und/oder dass die Steuereinheit (19) zumindest die Selektiereinheit (20) und/oder die Fördereinheit (26) ansteuern kann.

13. Verfahren zum Betreiben einer Vorrichtung (1), die insbesondere gemäß zumindest einem der vorangegangenen Ansprüche ausgebildet ist, zum Sortieren von Batterien (2), bei dem mit Hilfe einer Ausrichteinheit (3) der Vorrichtung (1) zugeführten Batterien (2) in eine Verarbeitungsorientierung (4) ausgerichtet werden,
**dadurch gekennzeichnet, dass**
einer Verarbeitungseinheit und/oder Erkennungseinheit (17) der Vorrichtung (1) die in Verarbeitungsorientierung (4) ausgerichteten Batterien (2) zugeführt werden und diese die in Verarbeitungsorientierung (4) ausgerichteten Batterien (2) verarbeitet und/oder erkennt.

14. Verfahren nach einem oder mehreren der vorherigen Ansprüche, **dadurch gekennzeichnet, dass** die Vorrichtung (1) eine Steuereinheit (19) aufweist, die von der Erkennungseinheit (17) erfassten Batterieeigenschaften mit Referenzdaten von Batterien (2) vergleicht und daraus die Batteriensorte ermittelt.

15. Verfahren nach einem oder mehreren der vorherigen Ansprüche, **dadurch gekennzeichnet, dass** die Steuereinheit (19) die Batterieeigenschaften zu einem Eigenschaftsvektor zusammenfasst und zu einem die Referenzdaten umfassenden Referenzvektor einen euklidischen Abstand ermittelt.

**Fig. 1**

EP 3 597 315 A1

Fig. 2

Fig. 3

**Fig. 4**

EP 3 597 315 A1

**Fig. 5**

**Fig. 6**

EP 3 597 315 A1

**Fig. 7**

**Europäisches Patentamt**

**European Patent Office**

**Office européen des brevets**

# EUROPÄISCHER RECHERCHENBERICHT

Nummer der Anmeldung

EP 19 18 6130

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 44 19 461 A1 (MASSEN ROBERT PROF DR ING [DE]) 7. Dezember 1995 (1995-12-07) * das ganze Dokument * ----- | 1-15 | INV. B07B1/12 B07B13/00 B07B13/04 |
| A,D | DE 43 34 714 C2 (TRIENEKENS ENTSORGUNG GMBH [DE]) 19. Februar 1998 (1998-02-19) * Zusammenfassung; Abbildungen * * Spalte 1, Zeile 49 - Spalte 2, Zeile 48 * ----- | 1-15 | B07B13/16 B07C5/02 B07C5/344 |

**RECHERCHIERTE SACHGEBIETE (IPC)**

B07B
B07C
H01M

Der vorliegende Recherchenbericht wurde für alle Patentansprüche erstellt

| Recherchenort | Abschlußdatum der Recherche | Prüfer |
|---|---|---|
| Den Haag | 16. Dezember 2019 | Kosicki, Tobias |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

 

& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 19 18 6130

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

16-12-2019

| Im Recherchenbericht angeführtes Patentdokument | Datum der Veröffentlichung | Mitglied(er) der Patentfamilie | Datum der Veröffentlichung |
|---|---|---|---|
| DE 4419461 A1 | 07-12-1995 | KEINE | |
| DE 4334714 C2 | 19-02-1998 | KEINE | |

Für nähere Einzelheiten zu diesem Anhang : siehe Amtsblatt des Europäischen Patentamts, Nr.12/82

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4334714 C2